# EUROPÄISCHE PATENTSCHRIFT

(11) **EP 2 666 216 B1**
(45) Veröffentlichungstag und Bekanntmachung des Hinweises auf die Patenterteilung: **27.05.2015**
(21) Anmeldenummer: 12720118.4
(22) Anmeldetag: 11.04.2012
(51) Int. Cl.: B60L 11/18, B65H 75/44, H02G 11/02

(54) **ANORDNUNG UND VERFAHREN ZUR ARRETIERUNG EINER AUFROLLAUTOMATIK EINES LADEKABELS FÜR EIN ELEKTROFAHRZEUG**
ARRANGEMENT AND METHOD FOR LOCKING AN AUTOMATIC REELING MECHANISM OF A CHARGING CABLE FOR AN ELECTRIC VEHICLE
SYSTÈME ET PROCÉDÉ DE BLOCAGE DU MÉCANISME D'ENROULEMENT AUTOMATIQUE D'UN CÂBLE DE CHARGE POUR UN VÉHICULE ÉLECTRIQUE

(30) Priorität: 27.04.2011 DE 102011017570
(43) Veröffentlichungstag der Anmeldung: 27.11.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2012/056505
(87) Internationale Veröffentlichungsnummer: WO 2012/146478

(56) Entgegenhaltungen:
- DE-A1-102009 016 895
- DE-A1-102009 045 639
- DE-U1- 20 101 983
- DE-U1-202009 013 675

## Beschreibung

Elektrofahrzeuge müssen zum Aufladen über ein Ladekabel mit einer Ladesäule verbunden werden. Das Ladekabel ist häufig fest mit der Ladesäule verbunden und wird durch einen Bediener lediglich am Elektrofahrzeug eingesteckt. Umgekehrt kann das Ladekabel auch mit dem Elektrofahrzeug fest verbunden sein, dann wird es an der Ladesäule eingesteckt. Denkbar ist auch ein Ladekabel mit zwei losen Enden, welches einem Kofferraum eines Elektrofahrzeugs entnommen wird und dann beidseitig eingesteckt wird.

Derartige Ladekabel weisen eine gewisse Länge auf, um auch bei ungünstig abgestellten Elektrofahrzeugen eine Verbindung zur nächsten Ladesäule herstellen zu können. Die Ladekabel können ähnlich dünn wie herkömmliche Stromkabel oder relativ dick und steif sein, wenn die Parameter des verwendeten Ladeverfahrens (Gleichstrom/Wechselstrom, Höhe des benötigten Ladestroms, usw.) dies erfordern.

Bei herkömmlichen Kraftstoff-Zapfsäulen ist eine Automatik bekannt, welche den Schlauch zur Zapfsäule zurückzieht. Diese kann in die Zapfsäule integriert sein oder in Form einer Aufhängung oberhalb der Zapfsäule realisiert sein. Soll der Schlauch aus der Zapfsäule herausgezogen und gegebenenfalls weiter von der Zapfsäule weggezogen werden, wenn sich die Tanköffnung des Fahrzeugs auf der gegenüberliegenden Seite befindet, muss ein Bediener kräftig am Schlauch ziehen.

Bei Ladesäulen für Elektrofahrzeuge ist bekannt, ein kurzes Ladekabel zu verwenden. Dann muss das Elektrofahrzeug jedoch genau passend eingeparkt werden. Alternativ ist bekannt, ein langes Ladekabel zu verwenden. Dieses verschmutzt jedoch, wenn es auf dem Boden liegt, und es muss von Hand auf- und abgewickelt werden. Das Ladekabel wird beispielsweise an einer Halterung der Ladesäule aufgehängt oder zusammengelegt im Kofferraum transportiert. Solange das Ladekabel auf dem Boden liegt, besteht eine Stolpergefahr für den Menschen. Weiterhin sind spiralförmige Ladekabel bekannt, welche durch Zug dehnbar sind. Die Zugspannung solcher Kabel lässt mit der Zeit nach. Weiterhin sind Spiralkabel nur für relativ dünne Ladekabel realisierbar.

Im Übrigen sind für herkömmliche Stromkabel Kabeltrommeln bekannt, auf welchen ein langes Kabel aufgewickelt werden kann. Auch bekannt ist eine Aufrollautomatik, beispielsweise in Staubsaugern, welche es erlaubt, ein Stromkabel herauszuziehen, wobei das Stromkabel dann in der entsprechenden Position verbleibt. Zum Aufrollen wird eine Taste betätigt, oder es wird kurzzeitig Zug auf das Kabel ausgeübt, um eine Arretierung zu lösen und das Kabel zurückzuführen.

Für Stecker von Ladekabeln für Elektrofahrzeuge ist bekannt, den Stecker während eines Ladevorgangs mechanisch zu arretieren, sodass er nicht abgezogen werden kann. Dies verhindert ein unberechtigtes Abziehen bei einem unbeaufsichtigten Laden eines geparkten Elektrofahrzeugs. Die Arretierung des Steckers ist beispielsweise an eine Türverriegelung eines Elektrofahrzeugs oder an einen Bezahlvorgang gekoppelt, wie in der DE 10 2007 002025 oder der CN 101 36 46 53 offenbart.

Aus der DE 10 2009 016 895 A1 ist eine Anordnung zur Arretierung einer Aufrollautomatik eines Ladekabels für ein Elektrofahrzeug bekannt, bei welcher die Aufrollautomatik für ein automatisches Aufrollen eines Ladekabels für ein Elektrofahrzeug eingerichtet ist, wobei das Ladekabel unter Überwindung einer Rückzugskraft, welche über das Ladekabel auf einen Stecker des Ladekabels wirkt, aus der Aufrollautomatik herausziehbar ist.

Aus der DE 10 2009 013 675 U1 ist ein Stecker eines Ladekabels für ein Elektroauto bekannt, welcher mittels eines Sensors detektiert, ob der Stecker durch einen Bediener berührt wird.

Aus der DE 10 2009 045 639 A1 ist eine Steuereinheit bekannt, welche detektiert, ob ein Stecker eingesteckt ist oder wie weit eine Kabeltrommel aufgerollt ist.

Aus der DE 201 01 983 U1 ist eine Anordnung zur Arretierung einer Aufrollautomatik eines Kabels bekannt, bei der die Aufrollautomatik für ein automatisches Aufrollen des Kabels eingerichtet ist, wobei das Kabel unter Überwindung einer Rückzugskraft, welche über das Kabel auf einen Stecker des Kabels wirkt, aus der Aufrollautomatik herausziehbar ist. Die Anordnung ist weiterhin eingerichtet zu einer Entkoppelung der Rückzugskraft von dem Stecker.

Der Erfindung liegt die Aufgabe zugrunde, eine Anordnung und ein Verfahren zur Arretierung einer Aufrollautomatik eines Ladekabels für ein Elektrofahrzeug anzugeben, welche die Handhabung des Ladekabels verbessern und/oder eine mechanische Beansuchurig des Ladeltabels oder seines Steckers verringern.

Diese Aufgabe wird erfindungsgemäß durch eine Anordnung gelöst, welche eine Aufrollautomatik aufweist, welche für ein automatisches Aufrollen eines Ladekabels für ein Elektrofahrzeug eingerichtet ist. Hierbei ist das Ladekabel unter Überwendung einer Rückzugskraft, welche über das Ladekabel auf einen Stecker des Ladekabels wirkt, aus der Aufrollautomatik herausziehbar.

Die Anordnung umfasst ferner eine Steuereinheit, welche eingerichtet ist zur Detektion, ob der Stecker eingesteckt ist oder durch einen Bediener nicht mehr berührt wird. Die Steuereinheit ist weiterhin eingerichtet zur Reduktion der Rückzugskraft oder zu einer Entkopplung der Rückzugskraft von dem Stecker, sobald der Stecker des Ladekabels eingesteckt ist oder durch den Bediener nicht mehr berührt wird.

Bei dem Verfahren wird ein Ladekabel durch einen Bediener unter Überwindung einer Rückzugskraft, welche über das Ladekabel auf einen Stecker des Ladekabels wirkt, aus einer Aufrollautomatik herausgezogen. Eine Steuereinheit detektiert, dass der Stecker des Ladekabels eingesteckt ist oder durch den Bediener nicht mehr berührt wird. Die Steuereinheit reduziert daraufhin die Rückzugskraft oder entkoppelt diese von dem Stecker.

Die Anordnung und das Verfahren weisen den Vorteil auf, dass eine Aufrollautomatik für das Ladekabel bereitgestellt wird, ohne dass die hierzu notwendige Rückzugskraft während des Aufladens des Elektrofahrzeugs am Kabel und dem Stecker zieht. Der Stecker des Ladekabels wird daher nicht durch die entsprechenden Zugkräfte, welche gegebenenfalls sogar seitlich wirken, mechanisch beschädigt. Neben einer mechanischen Belastung des Steckers wird auch eine mechanische Belastung einer Ladebuchse, in welche diese eingesteckt ist, vermieden. Die Aufrollautomatik ermöglicht es, lediglich den Stecker des Ladekabels zu greifen und nicht das Ladekabel selbst. Da viele Ladesäulen im Freien aufgestellt sind, ist das Kabel selbst Witterung und Schmutz ausgesetzt. Durch die Aufrollautomatik kann die Verschmutzung des Ladekabels zum einen verringert werden, da dieses geschützt in der Ladesäule oder im Elektrofahrzeug aufbewahrt wird und nur mit der benötigten Länge ausgezogen wird, sodass das Ladekabel gegebenenfalls mit dem Boden gar nicht in Berührung kommt. Da der Bediener das Kabel nicht als Ganzes greifen muss, sondern es lediglich am Stecker ausziehen kann, kommt der Bediener auch nicht mehr mit dem Kabel in Berührung, wodurch die Gefahr, Hände oder Kleidung zu beschmutzen, reduziert wird. Ferner wird eine Stolpergefahr für den Bediener verringert, da das Ladekabel nur noch mit der benötigten Länge ausgezogen wird.

Durch die Reduktion oder gänzliche Entkoppelung der Rückzugskraft wird die Aufrollautomatik für den Bediener zu einer bequemen Erleichterung, um das Ladekabel einzusetzen. Da die Rückzugskraft reduziert oder gänzlich entkoppelt wird, kann der Bediener den Stecker bedenkenlos während des Aufladens loslassen, ohne dass dieser beschädigt wird. Dies ist aufgrund der langen Ladevorgänge von Elektrofahrzeugen ohnehin eine notwendige Voraussetzung. Das Ladekabel verbleibt ferner durch die Reduktion bzw. Entkoppelung der Rückzugskraft in der gewünschten Länge. Der Bediener kann das Ladekabel auch gezielt am Boden so auslegen, dass eine Stolpergefahr nicht gegeben ist.

Gemäß einer Ausführungsform weist die Steuereinheit einen Signaleingang für einen Berührungs-Detektor auf, welcher am Stecker angebracht und insbesondere ein Taster oder Kraftmesser oder ein induktiver oder kapazitiver Berührungs-Sensor ist. Alternativ weist die Steuereinheit einen Signaleingang für einen Steckverbindungs-Detektor auf, insbesondere einen mechanischen Kontakt, welcher am Stecker angebracht ist und ein Signal erzeugt, wenn der Stecker eingesteckt ist. In einer Weiterbildung weist die Aufrollautomatik eine Feder auf, welche für die Rückzugskraft ursächlich ist und das automatische Aufrollen des Ladekabels bewirkt. Die Anordnung umfasst ferner eine Arretierungsvorrichtung, insbesondere eine von der Steuereinheit angesteuerte Klemmvorrichtung, welche für eine Arretierung des Ladekabels und damit zur Entkoppelung der Rückzugskraft von dem Stecker eingerichtet ist. In einer alternativen Weiterbildung weist die Aufrollautomatik einen Elektromotor auf, welcher durch die Steuereinheit angesteuert wird.

Eine Ladesäule, ein Elektrofahrzeug oder ein Ladekabel weisen die zuvor beschriebene Anordnung auf.

Gemäß einer Ausführungsform des Verfahrens detektiert die Steuereinheit, dass der Stecker des Ladekabels nicht mehr eingesteckt ist oder erneut durch einen Bediener berührt wird. Daraufhin erhöht die Steuereinheit die Rückzugskraft oder koppelt diese erneut an den Stecker.

In einer Weiterbildung des Verfahrens erkennt die Steuereinheit anhand einer Innenwiderstandsmessung zwischen Leitern des Ladekabels, anhand einer Strommessung oder anhand eines Datensignals, welches über das Ladekabel übertragen wird, dass der Stecker eingesteckt ist.

Gemäß einer Ausführungsform des Verfahrens ist die Steuereinheit programmiert, um das Ladekabel um eine vordefinierte Länge auszurollen, sobald der Stecker eingesteckt ist und nicht mehr berührt wird.

Im Folgenden werden Ausführungsbeispiele der Erfindung anhand von Figuren näher erläutert. Es zeigen:
- Figur 1: ein Elektrofahrzeug, welches mithilfe eines Ladekabels mit einer Ladesäule verbunden wird,
- Figur 2: eine Anordnung zur Arretierung einer Aufrollautomatik eines Ladekabels für ein Elektrofahrzeug gemäß einem Ausführungsbeispiel.

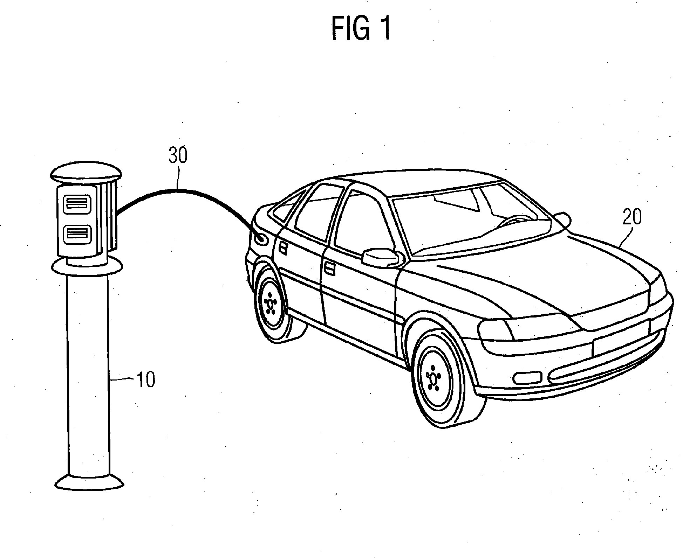

Figur 1 zeigt ein Elektrofahrzeug 20, welches mittels eines Ladekabels 30 mit einer Ladesäule 10 verbunden ist.

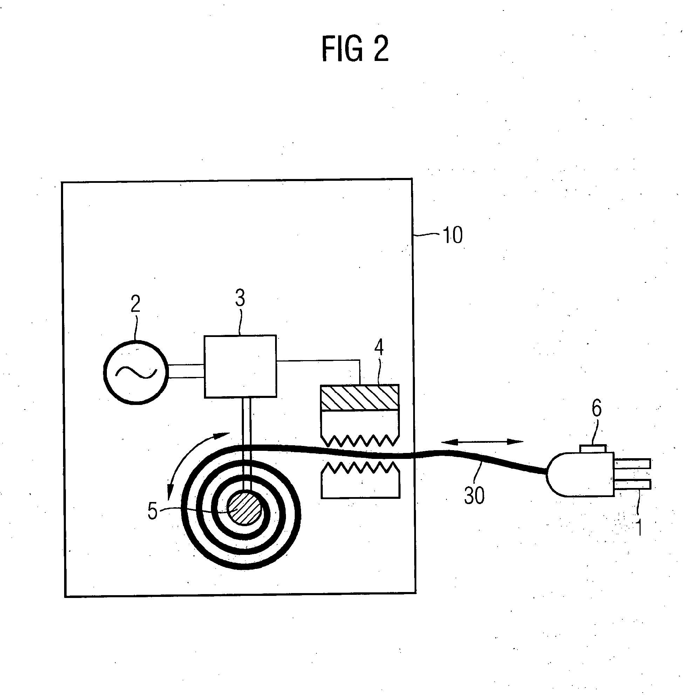

Figur 2 zeigt ein Ladekabel 30, welches in einer Ladesäule 10, beispielsweise auf einer Kabeltrommel, aufgewickelt ist. Eine Aufrollautomatik 5 bringt eine mechanische Rückzugskraft zum Aufrollen bzw. zum Rückführen des Ladekabels 30 auf dieses auf, wobei die Rückzugskraft auch auf einen Stecker 1 wirkt, sofern ein Bediener lediglich den Stecker 1 und nicht das Ladekabel 30 greift.

Gemäß dem vorliegenden Ausführungsbeispiel wird die Rückzugskraft abhängig davon modifiziert, ob der Stecker 1 des Ladekabels 30 (beispielsweise in eine Buchse eines Elektrofahrzeugs) eingesteckt ist oder von einem Bediener nicht mehr berührt wird. Dann wird die Rückzugskraft vom ausgezogenen Ladekabel bzw. dem Stecker 1 entkoppelt. Dies hat den Vorteil, dass das Ladekabel 30 in der aktuellen Länge gehalten wird, während der Stecker 1 eingesteckt ist bzw. vom Bediener nicht mehr berührt wird. Dies ist genau dann der Fall, wenn das Elektrofahrzeug über einen längeren Zeitraum aufgeladen wird. Der Vorteil liegt nun darin, dass während dieses Zeitraums keine Rückzugskraft auf den Stecker 1 wirkt, welche diesen mechanisch beschädigen könnte.

Sobald der Bediener nach dem Ende des Ladevorgangs den Stecker 1 erneut greift und aus der Gegenstelle entfernt, wird die Rückzugskraft durch eine Steuereinheit 3 erneut aktiviert, woraufhin das Ladekabel 30 automatisch durch die Aufrollautomatik 5 aufgewickelt wird.

Die Aufrollautomatik 5 ist beispielsweise mit Hilfe einer Feder realisiert, wobei die Rückzugskraft eine Federkraft ist. Um die Rückzugskraft von dem Stecker 1 zu entkoppeln, wird in diesem Ausführungsbeispiel das Ladekabel 30 durch eine Klemmvorrichtung 4 mechanisch arretiert. Die Klemmvorrichtung 4 ist beispielsweise ein pneumatisch, hydraulisch oder elektromechanisch beweglicher Zylinder, welcher durch die Steuereinheit 3 angesteuert wird.

In einer anderen Variante wird die Aufrollautomatik 5 durch einen Elektromotor implementiert. Die Steuereinheit 3 kann durch Steuerung einer Stromstärke eines Stroms, der am Elektromotor anliegt, ein Drehmoment bzw. Aufrollmoment bzw. die Rückzugskraft, welche der Elektromotor erzeugt, einstellen.

Sobald die Steuereinheit 3 erkennt, dass das Ladekabel 30 über den Stecker 1 eingesteckt wurde, kann es das Drehmoment bzw. die Rückzugskraft des Elektromoments anpassen und gegebenenfalls auch auf Null reduzieren. In einer Variante steuert die Steuereinheit 3 den Elektromotor so an, dass dieser nach dem Einstecken des Steckers 1 das Ladekabel 30 um eine weitere Strecke (z. B. 10 cm) abrollt oder eine Vor- und Zurückbewegung ausführt, welche dem Bediener signalisiert, dass die Ladesäule 10 das Einstecken des Steckers 1 erkannt und die Rückzugskraft verringert oder entkoppelt hat. Der Bediener kann daraufhin den Stecker 1 loslassen und gegebenenfalls das Ladekabel 30 am Boden so auslegen, dass keine Stolpergefahr besteht.

Die Steuereinheit 3 erkennt eine Berührung des Bedieners am Stecker 1 über einen Berührungs-Detektor 6, welcher beispielsweise als Taster, Kraftmesser oder induktiver bzw. kapazitiver Sensor ausgeführt ist. Alternativ erkennt die Steuereinheit 3, dass der Stecker 1 in eine Gegenstelle eingesteckt ist, wobei hierzu ein mechanischer Kontakt, eine Innenwiderstandsmessung der Stromverbindung über das Ladekabel 30, eine Widerstandsmessung zwischen Leitern des Ladekabels 30, eine Strommessung oder ein Datensignal, welches über das Ladekabel 30 übertragen wird, ausgewertet wird.

Bei der Erkennung, dass der Stecker eingesteckt ist, bzw. bei der Erkennung, dass ein Bediener den Stecker 1 losgelassen hat, handelt es sich um zwei alternative Ausführungsbeispiele, die aber auch miteinander kombiniert werden können.

Die Steuereinheit 3 ist beispielsweise ein Mikroprozessor oder eine elektrische Schaltung. Diese schaltet zum Laden des Elektrofahrzeugs eine Stromquelle 2 auf das Ladekabel 30, nachdem der Stecker 1 eingesteckt wurde.

Abweichend von Figur 1 muss die Aufrollautomatik 5 mit der Steuereinheit 3 und gegebenenfalls der Klemmvorrichtung 4 nicht in der Ladesäule 10 angeordnet sein, sondern darf auch im Elektrofahrzeug verbaut sein. Ferner ist auch ein Ladekabel denkbar, welches ein Mittelstück aufweist, in welchem die genannten Elemente angeordnet sind.

Die genannten Ausführungsbeispiele, Ausführungsformen, Weiterbildungen und Varianten sind frei miteinander kombinierbar.

## Patentansprüche

1. Anordnung zur Arretierung einer Aufrollautomatik (5) eines Ladekabels (30) für ein Elektrofahrzeug (20),
- mit einer Aufrollautomatik (5), welche für ein automatisches Aufrollen eines Ladekabels (30) für ein Elektrofahrzeug (20) eingerichtet ist, wobei das Ladekabel (30) unter Überwindung einer Rückzugskraft, welche über das Ladekabel (30) auf einen Stecker (1) des Ladekabels (30) wirkt, aus der Aufrollautomatik (5) herausziehbar ist,
**gekennzeichnet durch**
- eine Steuereinheit (3), welche eingerichtet ist
- zur Detektion, ob der Stecker (1) eingesteckt ist oder durch einen Bediener nicht mehr berührt wird, und
- zur Reduktion der Rückzugskraft oder zu einer Entkopplung der Rückzugskraft von dem Stecker (1), sobald der Stecker (1) des Ladekabels (30) eingesteckt ist oder **durch** den Bediener nicht mehr berührt wird.

2. Anordnung nach Anspruch 1,
- bei der die Steuereinheit (3) einen Signaleingang für einen Berührungs-Detektor aufweist, welcher am Stecker (1) angebracht und insbesondere ein Taster, Kraftmesser, induktiver oder kapazitiver Berührungssensor ist, oder
- bei der die Steuereinheit (3) einen Signaleingang für einen Steckverbindungs-Detektor (6), insbesondere einen mechanischen Kontakt, aufweist, welcher am Stecker (1) angebracht ist und ein Signal erzeugt, wenn der Stecker (1) eingesteckt ist.

3. Anordnung nach einem der vorangegangenen Ansprüche,
- bei der die Aufrollautomatik (5) eine Feder aufweist, welche für die Rückzugskraft ursächlich ist und das automatische Aufrollen des Ladekabels (30) bewirkt,
- mit einer Arretierungsvorrichtung, insbesondere einer von der Steuereinheit (3) angesteuerten Klemmvorrichtung (4), welche für eine Arretierung des Ladekabels (30) und damit zur Entkopplung der Rückzugskraft von dem Stecker (1) eingerichtet ist.

4. Anordnung nach Anspruch 1 oder 2,
- bei der die Aufrollautomatik (5) einen Elektromotor aufweist, der durch die Steuereinheit (3) angesteuert wird.

5. Ladesäule (10), welche eine Anordnung nach einem der vorangegangenen Ansprüche aufweist.

6. Elektrofahrzeug (20), welches eine Anordnung nach einem der Ansprüche 1-4 aufweist.

7. Ladekabel (30), welches eine Anordnung nach einem der Ansprüche 1-4 aufweist.

8. Verfahren zur Arretierung einer Aufrollautomatik (5) eines Ladekabels (30) für ein Elektrofahrzeug (20),
- bei dem ein Ladekabel (30) durch einen Bediener unter Überwindung einer Rückzugskraft, welche über das Ladekabel (30) auf einen Stecker (1) des Ladekabels (30) wirkt, aus einer Aufrollautomatik (5) herausgezogen wird,
**dadurch gekennzeichnet, dass**
- die Steuereinheit (3) detektiert, dass der Stecker (1) des Ladekabels (30) eingesteckt ist oder durch den Bediener nicht mehr berührt wird, und
- die Steuereinheit (3) die Rückzugskraft reduziert oder von dem Stecker (1) entkoppelt.

9. Verfahren nach Anspruch 8,
- bei dem die Steuereinheit (3) detektiert, dass der Stecker (1) des Ladekabels (30) nicht mehr eingesteckt ist oder erneut durch einen Bediener berührt wird, und
- bei dem die Steuereinheit (3) die Rückzugskraft erhöht oder erneut an den Stecker (1) koppelt.

10. Verfahren nach Anspruch 8 oder 9,
- bei der die Steuereinheit (3) anhand einer Innenwiderstandsmessung zwischen Leitern des Ladekabels (30), anhand einer Strommessung oder anhand eines Datensignals, welches über das Ladekabel (30) übertragen wird, erkennt, dass der Stecker (1) eingesteckt ist.

11. Verfahren nach einem der Ansprüche 8-10,
- bei der die Steuereinheit (3) programmiert ist, um das Ladekabel (30) um eine vordefinierte Länge auszurollen, sobald der Stecker (1) eingesteckt ist oder nicht mehr berührt wird.

## Claims

1. Arrangement for locking an automatic reeling mechanism (5) of a charging cable (30) for an electric vehicle (20),
- comprising an automatic reeling mechanism (5), which is designed for automatically reeling a charging cable (30) for an electric vehicle (20), wherein the charging cable (30) can be drawn out of the automatic reeling mechanism (5) by overcoming a retraction force which acts on a plug (1) of the charging cable (30) via the charging cable (30),
- **characterized by** a control unit (3), which is designed
- to detect whether the plug (1) is inserted or is no longer being touched by an operator, and
- to reduce the retraction force or to decouple the retraction force from the plug (1) as soon as the plug (1) of the charging cable (30) is inserted or is no longer being touched by the operator.

2. Arrangement according to Claim 1,
- in which the control unit (3) has a signal input for a tactile detector, which is fitted on the plug (1) and is in particular a pushbutton, a dynamometer, or an inductive or capacitive tactile sensor, or
- in which the control unit (3) has a signal input for a plug-type connection detector (6), in particular a mechanical contact, which is fitted to the plug (1) and generates a signal when the plug (1) is inserted.

3. Arrangement according to one of the preceding claims,
- in which the automatic reeling mechanism (5) has a spring, which is the cause of the retraction force and effects the automatic reeling of the charging cable (30),
- with a locking apparatus, in particular a clamping apparatus (4) which is driven by the control unit (3) and which is designed for locking the charging cable (30) and therefore for decoupling the retraction force from the plug (1).

4. Arrangement according to Claim 1 or 2,
- in which the automatic reeling mechanism (5) has an electric motor, which is driven by the control unit (3).

5. Charging station (10), which has an arrangement according to one of the preceding claims.

6. Electric vehicle (20), which has an arrangement according to one of Claims 1-4.

7. Charging cable (30), which has an arrangement according to one of Claims 1-4.

8. Method for locking an automatic reeling mechanism (5) of a charging cable (30) for an electric vehicle (20),
- in which a charging cable (30) is drawn out of an automatic reeling mechanism (5) by an operator by overcoming a retraction force, which acts on a plug (1) of the charging cable (30) via the charging cable (30),
- **characterized in that** the control unit (3) detects that the plug (1) of the charging cable (30) is inserted or is no longer being touched by the operator, and
- the control unit (3) reduces the retraction force or decouples it from the plug (1).

9. Method according to Claim 8,
- in which the control unit (3) detects that the plug (1) of the charging cable (30) is no longer inserted or is being touched by an operator again, and
- in which the control unit (3) increases the retraction force or couples it to the plug (1) again.

10. Method according to Claim 8 or 9,
- in which the control unit (3) identifies on the basis of an internal resistance measurement between conductors of the charging cable (30), on the basis of a current measurement or on the basis of a data signal which is transmitted via the charging cable (30), that the plug (1) is inserted.

11. Method according to one of Claims 8-10,
- in which the control unit (3) is programmed in order to unreel the charging cable (30) by a predefined length as soon as the plug (1) is inserted or is no longer being touched.

## Revendications

1. Dispositif de blocage d'un mécanisme d'enroulement automatique (5) d'un câble de charge (30) pour un véhicule électrique (20),
- comprenant un mécanisme d'enroulement automatique (5) conçu pour un enroulement automatique d'un câble de charge (30) pour un véhicule électrique (20), le câble de charge (30) pouvant être tiré du mécanisme d'enroulement automatique (5) en surmontant une force de rappel qui agit sur une prise mâle (1) du câble de charge (30) par le biais du câble de charge (30),
**caractérisé par**
- une unité de commande (3) qui est conçue
- pour détecter si la prise mâle (1) est enfichée ou n'est plus touchée par un utilisateur, et
- pour réduire la force de rappel ou pour découpler la force de rappel de la prise mâle (1) dès que la prise mâle (1) du câble de charge (30) est enfichée ou n'est plus touchée par l'utilisateur.

2. Dispositif selon la revendication 1,
- l'unité de commande (3) étant pourvue d'une entrée de signal pour un détecteur de contact qui est installé sur la prise mâle (1) et qui consiste notamment en un palpeur, un dynamomètre, un capteur de contact inductif ou capacitif, ou
- l'unité de commande (3) étant pourvue d'une entrée de signal pour un détecteur de fiche de raccordement (6), notamment un contact mécanique qui est situé au niveau de la prise mâle (1) et produit un signal lorsque la prise mâle (1) est enfichée.

3. Dispositif selon l'une des revendications précédentes,
- le mécanisme d'enroulement automatique (5) comprenant un ressort qui est à l'origine de la force de rappel et provoque l'enroulement automatique du câble de charge (30),
- comprenant un dispositif de blocage, notamment un dispositif de serrage (4) commandé par l'unité de commande (3), qui est conçu pour bloquer le câble de charge (30) et pour, ainsi, découpler la force de rappel de la prise mâle (1).

4. Dispositif selon la revendication 1 ou 2,
le mécanisme d'enroulement automatique (5) comprenant un moteur électrique qui est commandé par l'unité de commande (3).

5. Colonne de charge (10) pourvue d'un dispositif selon l'une des revendications précédentes.

6. Véhicule électrique (20) pourvu d'un dispositif selon l'une des revendications 1-4.

7. Câble de charge (30) pourvu d'un dispositif selon l'une des revendications 1-4.

8. Procédé de blocage d'un mécanisme d'enroulement automatique (5) d'un câble de charge (30) pour un véhicule électrique (20),
- dans lequel un câble de charge (30) est tiré d'un mécanisme d'enroulement automatique (5) par un utilisateur en surmontant une force de rappel qui agit sur une prise mâle (1) du câble de charge (30) par le biais du câble de charge (30),
**caractérisé en ce que**
- l'unité de commande (3) détecte que la prise mâle (1) du câble de charge (30) est enfichée ou n'est plus touchée par l'utilisateur et
- l'unité de commande (3) réduit la force de rappel ou la découple de la prise mâle (1).

9. Procédé selon la revendication 8,
- dans lequel l'unité de commande (3) détecte que la prise mâle (1) du câble de charge (30) n'est plus enfichée ou est à nouveau touchée par un utilisateur et
- dans lequel l'unité de commande (3) augmente la force de rappel ou la couple à nouveau à la prise mâle (1).

10. Procédé selon la revendication 8 ou 9,
- dans lequel l'unité de commande (3) détecte que la prise mâle (1) est enfichée grâce à une mesure de la résistance intérieure entre les conducteurs du câble de charge (30), à une mesure de courant ou à un signal de données qui est transmis par le biais du câble de charge (30).

11. Procédé selon l'une des revendications 8-10,
- dans lequel l'unité de commande (3) est programmée pour dérouler une longueur prédéfinie du câble de charge (30) dès que la prise mâle (1) est enfichée ou n'est plus touchée.
